# EUROPÄISCHE PATENTSCHRIFT

(11) **EP 3 626 662 B1**
(45) Veröffentlichungstag und Bekanntmachung des Hinweises auf die Patenterteilung: **08.09.2021**
(21) Anmeldenummer: 18195574.1
(22) Anmeldetag: 19.09.2018
(51) Int. Cl.: B65H 75/38, B65H 75/44

(54) **KABELTROMMEL**
CABLE REEL
TAMBOUR POUR CÂBLE

(43) Veröffentlichungstag der Anmeldung: 25.03.2020
(73) Patentinhaber: iPEK International GmbH, 87477 Sulzberg (DE)
(72) Erfinder: ZAHND, Fabian, 87448 Waltenhofen (DE); GRIMM, Simon, 87437 Kempten (DE); KENNERKNECHT, Gerhard, 87561 Oberstdorf-Tiefenbach (DE); KRESS, Michael, 87437 Kempten (DE)
(74) Vertreter: 2s-ip Schramm Schneider Bertagnoll Patent- und Rechtsanwälte Part mbB

(56) Entgegenhaltungen:
- EP-A1- 2 975 455
- EP-A2- 0 623 544
- WO-A2-2015/032406
- DE-A1- 3 032 909
- DE-C1- 19 743 215
- FI-B- 125 579
- US-A- 1 527 478
- US-A- 3 025 009
- US-A- 3 360 242
- US-A- 3 576 295
- US-A- 3 966 171

## Beschreibung

### Gebiet der Erfindung

Die Erfindung betrifft eine Kabeltrommel, insbesondere für ein Rohrinspektionssystem, wobei die Kabeltrommel ein Gestell und eine Kabelaufnahme aufweist, wobei die Kabelaufnahme drehbar an dem Gestell angeordnet ist, und wobei ein Kabel auf die Kabelaufnahme aufwickelbar und von der Kabelaufnahme abwickelbar ist.

### Hintergrund der Erfindung

Derartige Kabeltrommeln für Rohrinspektionssysteme sind bekannt. Sie werden verwendet um Kabel, etwa Stromkabel, auf- und abzuwickeln. Mit dem Stromkabel kann etwa ein Fahrwagen, der in einem Kanal verfahren wird, mit elektrischer Energie versorgt werden. Das Kabel kann auch für eine Datenübertragung von und zu dem Fahrwagen genutzt werden. Das Kabel wird von dem Fahrwagen in den Kanal gezogen.

Am vorderen Ende des Kabels kann anstelle eines Fahrwagens ein sogenannter Schiebeaal mit einer bestimmten Länge angeordnet sein. Der Schiebeaal weist eine bestimmte Steifigkeit auf. An dem freien Ende des Schiebeaals kann beispielsweise eine Bildaufnahmeeinrichtung (Kamera) angeordnet sein. Aufgrund der Steifigkeit des Schiebeaals kann dieser in ein Rohr oder in einen Kanal geschoben werden. Der Schiebeaal kann auch mit einem Fahrwagen in den Kanal verbracht werden, wobei der Fahrwagen angepasst sein kann, den Schiebaal in den Kanal vorzuschieben. Unabhängig davon, wie der Schiebeaal in den Kanal verbracht wird, zieht der Schiebeaal das am hinteren Ende befestigte Kabel hinter sich her. Der Schiebeaal selbst weist ebenfalls Strom- und/oder Signalleitungen auf, die mit den Strom-/Signalleitungen des Kabels gekoppelt sind. Der Schiebeaal ist im Wesentlichen nichts anderes als ein speziell ausgestaltetes Kabel mit einer vorbestimmten Steifigkeit.

Sowohl Kabel als auch Schiebeaal können auf eine einzige Kabeltrommel aufgewickelt bzw. von dieser wieder abgewickelt werden. Aufgrund der Steifigkeit des Schiebeaals ist das Aufwickeln auf die Kabeltrommel äußerst umständlich. Denn aufgrund seiner Steifigkeit versucht der Schiebeaal während des Aufwickelns auf die Kabeltrommel seine ursprüngliche Ausrichtung einzunehmen, d.h. er versucht von der gekrümmten Ausrichtung in die weitgehende geradlinige Ausrichtung zurückzukehren. Hierbei kann es zu Überkreuzungen des aufgewickelten Schiebeaals kommen.

Ebenso sollte beim Aufwickeln des Kabels darauf geachtet werden, dass sich das Kabel nicht überkreuzt.

Aus der EP 0 623 544 A2 und aus der US 3,025,009 sind jeweils Kabeltrommeln bekannt, die ein Gestell und eine Kabelaufnahme aufweisen, wobei die Kabelaufnahme drehbar an dem Gestell angeordnet ist, wobei ein Kabel auf die Kabelaufnahme aufwickelbar und von der Kabelaufnahme abwickelbar ist, und wobei die Kabelaufnahme einen inneren Korb und einen äußeren Korb aufweist, wobei der Durchmesser des inneren Korbes kleiner ist als der Durchmesser des äußeren Korbes, der innere Korb koaxial zum äußeren Korb und innerhalb des äußeren Korbes angeordnet ist, und der innere Korb zur Aufnahme eines ersten Kabelabschnittes des Kabels und der äußere Korb zur Aufnahme eines zweiten Kabelabschnittes des Kabels vorgesehen sind.

### Aufgabe der Erfindung

Aufgabe der vorliegenden Erfindung ist es daher, eine Kabeltrommel bereitzustellen, mit der ein Kabel und ein daran angeordneter Schiebeaal einfach und sicher auf eine Kabeltrommel aufgewickelt und von dieser wieder abgewickelt werden kann, ohne dass es hierbei zu Überkreuzungen des Kabels und/oder des Schiebeaals kommt.

### Erfindungsgemäße Lösung

Erfindungsgemäß wird diese Aufgabe mit einer Kabeltrommel nach dem unabhängigen Patentanspruch gelöst. Vorteilhafte Ausgestaltungen der Erfindung sind in den abhängigen Ansprüchen angegeben.

Bereitgestellt wird demnach eine Kabeltrommel, insbesondere für ein Rohrinspektionssystem, wobei die Kabeltrommel ein Gestell und eine Kabelaufnahme aufweist, wobei die Kabelaufnahme drehbar an dem Gestell angeordnet ist, wobei ein Kabel auf die Kabelaufnahme aufwickelbar und von der Kabelaufnahme abwickelbar ist, und wobei
- die Kabelaufnahme einen inneren Korb und einen äußeren Korb aufweist, wobei der Durchmesser des inneren Korbes kleiner ist als der Durchmesser des äußeren Korbes,
- der innere Korb koaxial zum äußeren Korb und innerhalb des äußeren Korbes angeordnet ist,
- der innerer Korb und der äußere Korb unabhängig voneinander drehbar sind,
- der innere Korb zur Aufnahme eines ersten Kabelabschnittes des Kabels und der äußere Korb zur Aufnahme eines zweiten Kabelabschnittes des Kabels vorgesehen sind, und
- an dem äußeren Korb eine Führungseinrichtung vorgesehen ist, durch die der erste Kabelabschnitt zum inneren Korb oder umgekehrt führbar ist,
wobei
die Führungseinrichtung zwei zueinander beabstandete und parallel zur Drehachse verlaufende Rollen aufweist, wobei der erste Kabelabschnitt zwischen den beiden Rollen verläuft.

An dem Gestell kann eine Zuführeinrichtung angeordnet sein, die angepasst ist,
- das Kabel zum Aufwickeln definiert der Kabelaufnahme zuzuführen, und/oder
- das Kabel definiert von der Kabelaufnahme abzuwickeln.

Die Zuführeinrichtung kann radial außerhalb des äußeren Korbes angeordnet sein. Optional kann die Zuführeinrichtung auch seitlich am äußeren Korb angeordnet sein.

Die Zuführeinrichtung kann zumindest eine erste Antriebseinheit aufweisen, mit der das Kabel definiert zugeführt wird und/oder definiert abgewickelt wird.

Der innere Korb kann mit einer zweiten Antriebseinheit gekoppelt sein, um den inneren Korb um eine Drehachse zu drehen.

Der äußere Korb kann um die Drehachse frei drehbar gelagert sein.

Die Führungseinrichtung kann so an dem äußeren Korb angeordnet sein, dass der erste Kabelabschnitt von radial außerhalb des äußeren Korbes zum inneren Korb oder umgekehrt führbar ist.

Vorteilhaft ist es, wenn
- der Durchmesser des Kabels des ersten Kabelabschnittes kleiner ist als der Durchmesser des Kabels des zweiten Kabelabschnittes, und/oder
- der erste Kabelabschnitt über ein Koppelelement mit dem zweiten Kabelabschnitt gekoppelt ist,
   wobei der Abstand der beiden Rollen (31, 32) so gewählt ist, dass er
- größer ist als der Durchmesser des Kabels des ersten Kabelabschnittes und
- kleiner ist als der Durchmesser des Kabels des zweiten Kabelabschnittes und/oder kleiner ist als der Durchmesser des Koppelelements.

Die Führungseinrichtung kann zusammen mit dem Koppelelement und/oder zusammen mit dem Übergangsbereich vom ersten Kabelabschnitt zum zweiten Kabelabschnitt eine Mitnehmereinrichtung bilden, derart, dass beim Aufwickeln des Kabels der vollständig auf dem inneren Korb aufgewickelte erste Kabelabschnitt den äußeren Korb mitnimmt, sodass der zweite Kabelabschnitt auf den äußeren Korb aufgewickelt wird.

Die Zuführeinrichtung kann entlang einer Führungseinrichtung verfahrbar sein, vorzugsweise alternierend hin und her verfahrbar, wobei die Führungseinrichtung vorzugsweise mindestens so lang ist wie die Breite der Kabelaufnahme.

Die Führungseinrichtung kann eine Führungsschiene umfassen, die vorzugswiese parallel zur Drehachse verläuft.

Die Zuführeinrichtung kann eine dritte Antriebseinheit aufweisen, mit der die Zuführeinrichtung verfahren wird.

Die Verfahrgeschwindigkeit der Zuführeinrichtung kann abhängig vom Durchmesser des Kabels sein.

Die Zuführeinrichtung kann angepasst sein, das Kabel während des Aufwickelns auf die Kabelaufnahme zwischen der Zuführeinrichtung und der Kabelaufnahme zu spannen oder unter Spannung zu halten.

Die Kabeltrommel kann eine Sensoreinrichtung aufweisen, die angepasst ist, während des Aufwickelns und/oder während des Abwickelns des Kabels den Übergangsbereich vom ersten Kabelabschnitt zum zweiten Kabelabschnitt und/oder das Koppelelement zu detektieren, wobei die Zuführeinrichtung angepasst ist, bei einer Detektion des Übergangsbereiches und/oder des Koppelelements die Verfahrgeschwindigkeit zu ändern.

Die zumindest eine erste Antriebseinheit und die zweite Antriebseinheit können so aufeinander abgestimmt sein, dass
- die zumindest eine erste Antriebseinheit die Aufwickelgeschwindigkeit und/oder die Abwickelgeschwindigkeit vorgeben bzw. festlegt, und
- die zweite Antriebseinheit gewährleistet, dass das Kabel zwischen der Zuführeinrichtung und der Kabelaufnahme gespannt ist.

Die Kabeltrommel kann eine Anzahl von zueinander beabstandeten Querstreben aufweisen, die weitgehend parallel zur Drehachse verlaufen, wobei die Querstreben
- radial außerhalb des äußeren Korbes und in Umfangsrichtung zum äußeren Korb angeordnet sind und an dem Gestell befestigt sind, oder
- in Umfangsrichtung am äußeren Korb angeordnet sind und an dem äußeren Korb befestigt sind.

Bei dem ersten Kabelabschnittes kann es sich um ein gewöhnliches Kabel, etwa ein Kabel mit Strom- und oder Signalleitungen handeln. Bei dem zweiten Kabelabschnitt kann es sich um einen Schiebeaal handeln, der ebenfalls Strom- und oder Signalleitungen aufweist. Der Schiebeaal (zweiter Kabelabschnitt) weist im Vergleich zu dem Kabel (erster Kabelabschnitt) ein deutliche höherer Steifigkeit auf.

Alternativ hierzu kann es sich bei dem zweiten Kabelabschnitt ebenfalls um ein gewöhnliches Kabel handeln, das aber im Vergleich zum ersten Kabelabschnitt einen größeren Durchmesser aufweist.

Sowohl der erste Kabelabschnitt als auch der zweite Kabelabschnitt sind angepasst mit einem Rohr-/und oder Kanalinspektionssystem verwendet zu werden.

Durch das Vorsehen eines inneren und eines äußeren Korbes kann gewährleistet werden, dass der erste Kabelabschnitt auf einen anderen Korb aufgewickelt wird als der zweite Kabelabschnitt. Dadurch wird erreicht, dass der zweite Kabelabschnitt beim Aufwickeln nebeneinanderliegend aufgewickelt wird. Bei einem Aufwickeln des zweiten Kabelabschnittes auf dem inneren Korb kann das nicht in jedem Fall garantiert werden, da der zweite Kabelabschnitt beim Aufwickeln direkt neben dem ersten Kabelabschnitt zu liegen kommen kann. Da der zweite Kabelabschnitt aber einen größeren Durchmesser aufweist als der erste Kabelabschnitt würde so eine Stufen zwischen dem Ende des ersten Kabelabschnitten und dem Anfang des zweiten Kabelabschnittes entstehen, die den weiteren Aufwickelvorgang negativ beeinträchtigen kann.

Wenn ein zweiter Kabelabschnitt mit einer höheren Steifigkeit ebenfalls auf den inneren Korb gewickelt würde, legen sich die Lagen bei ausreichendem Zug zuerst normal aufeinander. Wird der Aufwickelvorgang aber beendet oder das Kabel wieder abgewickelt oder der Antrieb der Kabelaufnahme abgeschaltet, kann der dem Kabel beaufschlagte Zug nicht dauerhaft aufrechterhalten werden bzw. kann nur mit erheblichen zusätzlichen technischen Aufwand aufrechterhalten werden. Das Nachlassen des Zuges führt dazu, dass die inneren gewickelten Lagen des zweiten Kabelabschnittes, die aufgrund der hohen Steifigkeit des zweiten Kabelabschnittes einer großen Vorspannung unterliegen, nach außen drücken und sich an den äußeren Lagen vorbeischieben. Beim Abwickeln liegen die Lagen des zweiten Kabelabschnittes, die eigentlich zuerst abgewickelt werden sollen, plötzlich unter den vormals inneren Lagen. Dieses Verhalten wird Überwurf genannt und führt häufig dazu, dass das Kabel aufgrund der mehrfach "verhedderten" Lagen nicht mehr oder nur unter erheblichem Aufwand abgewickelt werden kann. Häufig ist ein Öffnen der Kabeltrommel bzw. ein langwieriges händisches Auf und Abwickeln notwendig, um diese Überwürfe wieder zu lösen.

Durch das Vorsehen einer Zuführeinrichtung, mit der das Kabel zum Aufwickeln definiert der Kabelaufnahme zuführbar ist und/oder mit der das Kabel definiert von der Kabelaufnahme abwickelbar ist, werden solche Überwürfe vermieden.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: eine erfindungsgemäße Kabeltrommel in einer perspektivischen Ansicht und in einer Seitansicht;
- Fig. 2: eine erfindungsgemäße Kabeltrommel in einer Schnittansicht entlang der Schnittachse A-A;
- Fig. 3: einen Ausschnitt B der Fig. 2 in einer vergrößerten Ansicht; und
- Fig. 4: schematische Ansichten (Abbildungen (a) bis (d)) einer erfindungsgemäßen Kabeltrommel zur Verdeutlichung eines Aufwickelvorganges.

### Detaillierte Beschreibung der Erfindung

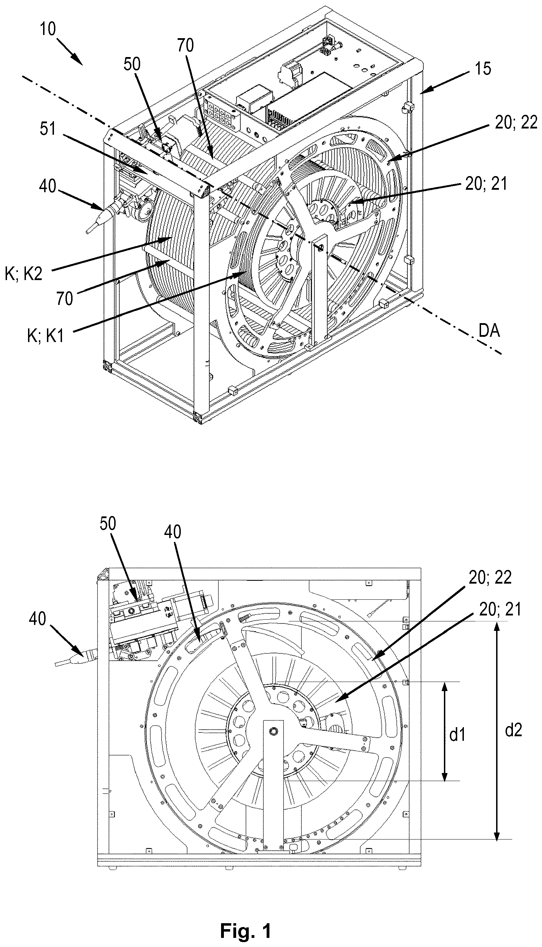

Fig. 1 zeigt eine erfindungsgemäße Kabeltrommel 10 in einer perspektivischen Ansicht (oben) und in einer Seitansicht (unten).

Die Kabeltrommel 10 weist ein Gestell 15 auf, das hier im Wesentlichen als quaderförmiger Rahmen ausgestaltet ist. An dem Gestell 15 ist eine Kabelaufnahme 20 angeordnet, auf der das Kabel K aufgewickelt wird und von der das Kabel K abgewickelt wird.

Die Kabelaufnahme 20 besteht aus zwei Körben, nämlich aus einem inneren Korb 21 und aus einem äußeren Korb 22, wobei der innere Korb 21 koaxial zum äußeren Korb 22 und innerhalb des äußeren Korbes 22 angeordnet ist. Beide Körbe 21, 22 sind um die Drehachse DA drehbar. Der innere Korb 21 weist einen Durchmesser d1 auf. Der äußere Korb weist einen Durchmesser d2 auf.

Der äußere Korb 22 ist hierbei unabhängig vom inneren Korb 21 drehbar. Das heißt, dass der innere Korb 21 gedreht werden kann, während der äußere Korb 22 stillsteht, oder umgekehrt. Beide Körbe 21, 22 können aber auch gleichzeitig gedreht werden.

Gemäß der Erfindung ist dem inneren Korb 21 ein hier nicht gezeigtes Antriebsmittel, beispielsweise ein Elektromotor zugeordnet, mit dem der innere Korb 21 um die Drehachse DA gedreht werden kann. Der äußere Korb 22 weist hingegen kein eigenes Antriebsmittel auf, d.h. der äußere Korb ist unabhängig vom inneren Korb 21 um die Drehachse DA frei drehbar.

Das aufzuwickelnde Kabel K besteht aus zwei Kabelabschnitten K1, K2.

Gemäß der in Fig. 1 gezeigten Ausgestaltung ist der erste Kabelabschnitt K1 über ein Koppelelement 40 mit dem zweiten Kabelabschnitt K2 verbunden. Das Koppelelement 40 weist einen größeren Durchmesser auf als der erste Kabelabschnitt K1. In der unteren Abbildung der Fig. 1 ist das Koppelelement 40 zweimal gezeigt, einmal außerhalb des Gestells 15, d.h. bevor es auf den äußeren Korb 22 aufgewickelt wird, und einmal bereits im am äußeren Korb 22 aufgewickelten Zustand.

Alternativ kann der erste Kabelabschnitt K1 auch ohne ein Koppelelement 40 mit dem zweiten Kabelabschnitt K2 verbunden sein. In diesem Fall ist es erfindungsgemäß vorgesehen, dass der Durchmesser des zweiten Kabelabschnittes K2 größer ist als der Durchmesser des ersten Kabelabschnittes K1.

Erfindungsgemäß ist es vorgesehen, dass der erste Kabelabschnitt K1 auf dem inneren Korb 21 aufgewickelt wird, während der zweite Kabelabschnitt K2 auf dem äußeren Korb 22 aufgewickelt wird. Die Differenz der beiden Korbdurchmesser d1, d2 ist so zu wählen, dass der gesamte erste Kabelabschnitt K1 vollständig auf dem inneren Korb 21 aufgewickelt werden kann.

An dem Gestell 15 ist eine Zuführeinrichtung 50 angeordnet, mit der das Kabel K definiert auf die Kabelaufnahme 20 aufgewickelt bzw. definiert von der Kabelaufnahme 20 abgewickelt werden kann. "Definiert" bedeutet hier, dass das Kabel K von der Zuführeinrichtung 50 mit einer bestimmten Geschwindigkeit der Kabelaufnahme 20 zum Aufwickeln zugeführt wird bzw. von der Zuführeinrichtung 50 mit einer bestimmten Geschwindigkeit von der Kabelaufnahme 20 abgewickelt wird. Für das definierte Auf- bzw. Abwickeln weist die Zuführeinrichtung 50 hier nicht gezeigte Vorschubmittel auf, mit denen der Vorschub des Kabels zum Auf- bzw. Abwickeln bewerkstelligt wird.

In einer Ausgestaltung können die Vorschubmittel zwei oder mehre Rollen aufweisen, die mit einer vorbestimmten Kraft am Kabelmantel aufliegen. Durch Drehen der Rollen wird das Kabel vorgeschoben. Die Rollen können mit einem Elektromotor angetrieben werden.

In einer alternativen Ausgestaltung können die Vorschubmittel Klemmbacken aufweisen, zwischen denen das Kabel geklemmt wird. Die Klemmbacken können geöffnet und geschlossen werden. Die Klemmbacken bewegen sich hin und her und nehmen im geschlossenen Zustand das Kabel in Vorschubrichtung mit. Nach dem Vorschub öffnen sich die Klemmbacken und bewegen sich entgegen der Vorschubrichtung bis zu einer Endstellung, wo sie wieder geschlossen werden.

Vorteilhaft ist es hierbei, wenn zwei Klemmbackenpaare vorgesehen sind, die sich alternierend hin und her bewegen. Dabei ist jeweils ein Klemmbackenpaar geschlossen. Das jeweils geschlossene Klemmbackenpaar bewegt sich in Vorschubrichtung und bewirkt so den Vorschub des Kabels, während das jeweils andere Klemmbackenpaar geöffnet ist und sich entgegen der Vorschubrichtung bewegt. Dadurch ist gewährleistet, dass das Kabel zu jedem Zeitpunkt von einem der beiden Klemmbackenpaare gehalten wird.

Das Bewegen der Klemmbacken in bzw. entgegen der Vorschubrichtung kann mittels eines Elektromotors bewerkstelligt werden.

In einer weiteren alternativen Ausgestaltung können die Vorschubmittel auch Zahnriemen oder Ketten aufweisen, die beidseitig mit einer vorbestimmten Kraft am Kabelmantel aufliegen. Die Zahnriemen oder Ketten können mit einem Elektromotor angetrieben werden.

Andere Vorschubmittel können ebenfalls vorgesehen werden. Wichtig ist hierbei lediglich, dass mit diesen ein definierter Vorschub (beim Aufwickeln und/oder beim Abwickeln) des Kabels möglich ist.

Die Zuführeinrichtung 50 ist auf einer Führungseinrichtung 51 angeordnet. Die Führungseinrichtung 51 kann als Führungsschiene 51 ausgestaltet sein, die im Wesentlichen parallel zur Drehachse DA verläuft und radial außerhalb des äußeren Korbes 22 am Rahmen 15 angeordnet ist. Die Zuführeinrichtung 50 kann entlang der Führungseinrichtung 51 bzw. entlang der Führungsschiene 51 hin und her verfahren werden. Zum Verfahren der Zuführeinrichtung 50 entlang der Führungsschiene 51 weist die Zuführeinrichtung 50 einen hier nicht gezeigten Elektromotor auf. Die Führungseinrichtung 51 bzw. die Führungsschiene 51 ist vorzugsweise mindestsens so lang wie die Kabelaufnahme 20 breit ist.

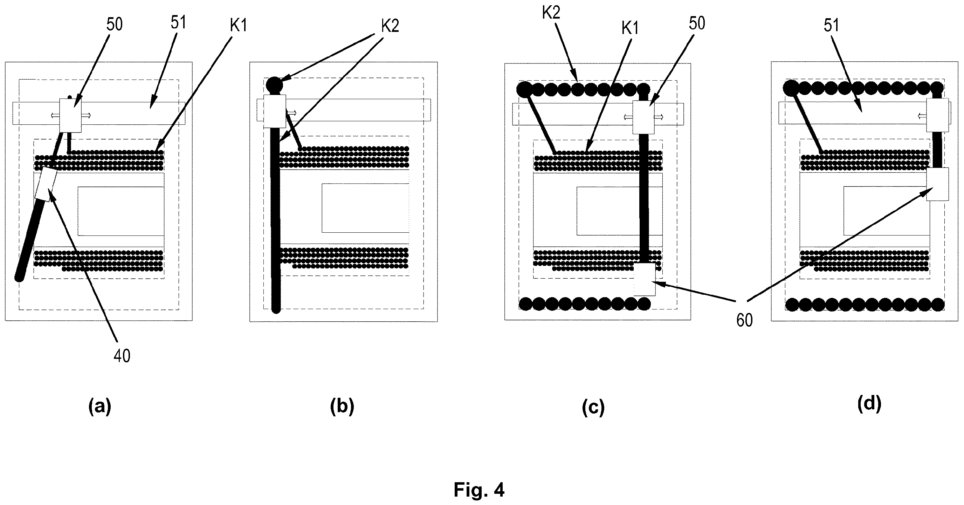

Durch das Verfahren der Zuführeinrichtung 50 wird gewährleistet, dass das aufzuwickelnde Kabel K auf dem jeweiligen Korb korrekt aufgewickelt wird, d.h. dass jede Wicklung des Kabels unmittelbar neben der vorhergehenden Wicklung liegt, wie es beispielsweise in Fig. 4 zu sehen ist. Die Zuführeinrichtung 50 wird hierbei so verfahren, dass ihre Position auf der Führungsschiene 51 der aktuellen Wickelposition des Kabels auf dem jeweiligen Korb entspricht. Das heißt, dass die Zuführeinrichtung 50 während eines Aufwickelvorganges stetig und mit einer vorbestimmten Geschwindigkeit entlang der Führungsschiene 51 verfahren wird.

Die Geschwindigkeit, mit der die Zuführeinrichtung 50 entlang der Führungsschiene 51 verfahren wird, hängt einerseits von der Geschwindigkeit (Wickelgeschwindigkeit), mit der das Kabel auf- bzw. abgewickelt wird, und andererseits vom Durchmesser des gerade auf- bzw. abzuwickelnden Kabelabschnittes ab. Bei gleichbleibender Wickelgeschwindigkeit erhöht sich bei einer Vergrößerung des Durchmessers des gerade aufzuwickelnden Kabelabschnittes die Verfahrgeschwindigkeit der Zuführeinrichtung 50. Bei einer Erhöhung der Wickelgeschwindigkeit und bei gleichbleibenden Durchmesser des aufzuwickelnden Kabelabschnittes erhöht sich die Verfahrgeschwindigkeit ebenfalls.

Die Wickelgeschwindigkeit wird durch die Vorschubmittel der Zuführeinrichtung 50 festgelegt bzw. vorgegeben. Werden als Vorschubmittel beispielsweise zwei oder mehr Rollen verwendet, so kann aus der Drehzahl der Rollen bzw. aus der Drehzahl des Elektromotors, mit dem die Rollen angetrieben werden, die Wickelgeschwindigkeit (= Geschwindigkeit, mit der das Kabel den Rollen zugeführt wird bzw. mit der das Kabel von den Rollen abgewickelt wird) abgeleitet werden. Eine Steuereinrichtung kann dann anhand der Wickelgeschwindigkeit und anhand des Kabeldurchmessers (der mittels an der Zuführeinrichtung 50 angeordneter Sensoren detektiert werden kann) die erforderliche Verfahrgeschwindigkeit des Zuführeinrichtung ermitteln und den für das Verfahren der Zuführeinrichtung vorgesehenen Elektromotor entsprechend steuern. Anstelle eines Ermittelns des Kabeldurchmessers mit entsprechenden Sensoren können die Kabeldurchmesser für die beiden Kabelabschnitte K1, K2 auch in einer Speichereinrichtung der Steuereinrichtung hinterlegt werden.

Die Zuführeinrichtung 50 kann zudem über eine Sensoreinrichtung verfügen, mit der der Übergang von einem Kabelabschnitt zum anderen Kabelabschnitt detektiert werden kann.

Dieser Übergang kann anhand einer Detektion der Änderung des Kabeldurchmessers detektiert werden, wobei hierfür die Kabeldurchmesser selbst nicht detektiert werden müssen, wenn die Kabeldurchmesser in der Speichereinrichtung hinterlegt sind. Aufgrund der aktuellen Vorschubrichtung weiß die Steuereinrichtung welcher Kabelabschnitt nach einer Detektion einer Änderung des Kabeldurchmessers aktuell von ihr vorgeschoben wird.

Ist hingegen ein Koppelelement 40 zwischen den beiden Kabelabschnitten vorgesehen, kann diese Sensoreinrichtung ein Passieren des Koppelelements detektieren.

Ohne Vorsehen eines Koppelelements ist es erfindungsgemäß vorgesehen, dass der Durchmesser des zweiten Kabelabschnitt K2 größer ist als der Durchmesser des ersten Kabelabschnitt K1.

Ist hingegen ein solches Koppelelement 40 vorgesehen, können die Durchmesser des ersten und des zweiten Kabelabschnittes identisch sein - damit wäre bei gleichbleibender Wickelgeschwindigkeit die Verfahrgeschwindigkeit der Zuführeinrichtung 50 für beide Kabelabschnitte identisch. Wichtig ist lediglich, dass der Durchmesser des Koppelelements größer ist als der Durchmesser des ersten Kabelabschnitts K1.

Ist das aufzuwickelnde Kabel K so lang, dass mehrere Lagen auf dem jeweiligen Korb 21, 22 aufgewickelt werden müssen, dann ändert die Zuführeinrichtung 50 an vorbestimmten Endpositionen ihre Fahrrichtung. Diese Endpositionen können für den inneren Korb 21 und für den äußeren Korb 22 verschieden sein, etwa wenn der innere Korb 21 eine geringere Breite aufweist als der äußere Korb 22, wie beispielsweise in Fig. 4 erkennbar ist.

Mit dem Antriebsmittel, beispielsweise ein Elektromotor, des inneren Korbes 21 wird der innere Korb 21 gedreht, sodass der von der Zuführeinrichtung 50 zugeführte erste Kabelabschnitt K1 auf den inneren Korb 21 aufgewickelt wird. Durch den Antrieb des inneren Korbes 21 wird die Wickelgeschwindigkeit aber nicht beeinflusst - diese wird ausschließlich durch die Zuführeinrichtung 50 festgelegt, wie vorstehend beschrieben. Das Antriebsmittel des inneren Korbes 21 ist aber so ausgelegt bzw. wird so betrieben, dass der auf den inneren Korb 21 aufzuwickelnde erste Kabelabschnitt K1 zwischen dem inneren Korb 21 und der Zuführeinrichtung 50 immer unter Spannung steht bzw. vorgespannt ist. Das Antriebsmittel des inneren Korbes 21 wird dabei letztlich wie eine unendliche Feder.

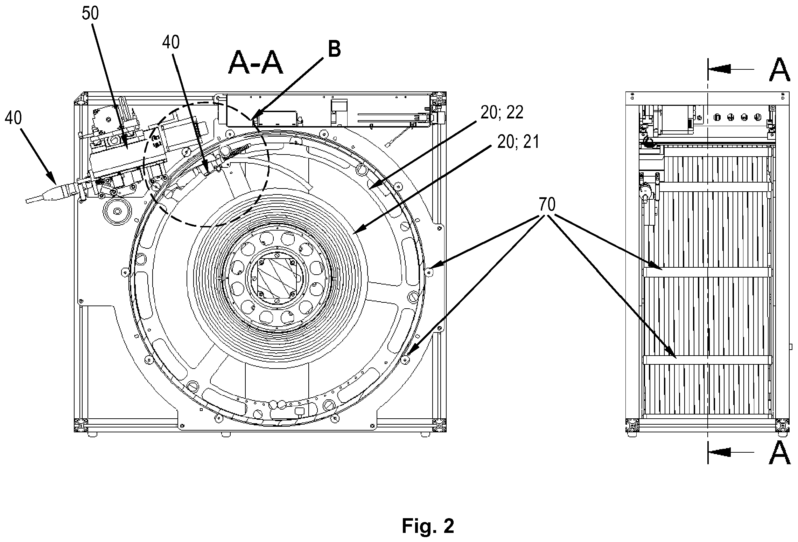

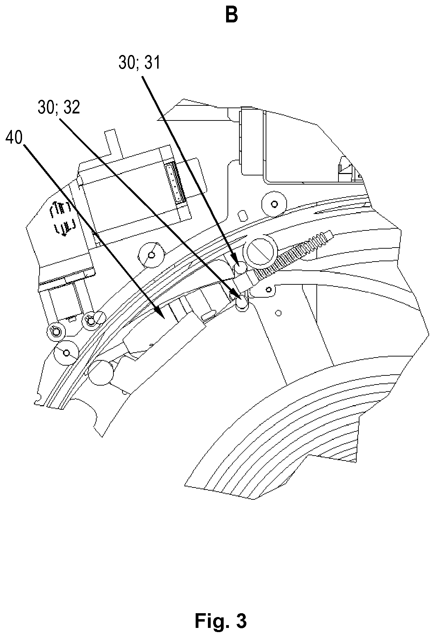

Sobald das Koppelelement 40 der Kabelaufnahme 20 zugeführt wird (beim Aufwickeln des Kabels K) bewirkt das Koppelement zusammen mit einer Führungseinrichtung 30 (siehe Fig. 2 und Fig. 3) dass sich auch der äußere Korb 22 dreht und das Koppelelement und der dem Koppelelement nachfolgende zweite Kabelabschnitt K2 auf den äußeren Korb 22 aufgewickelt werden. Das Koppelelement 40 und die Führungseinrichtung 30 wirken hier als eine Art Mitnehmer, der den äußeren Korb 22 bei einer Drehung des inneren Korbes 21 mitnimmt. Dieses Prinzip wird mit Bezug auf Fig. 2 und Fig. 3 näher beschrieben.

Entsprechendes gilt auch, wenn kein Koppelelement zwischen den beiden Kabelabschnitten K1, K2 vorgesehen ist, und der Durchmesser des ersten Kabelabschnittes K1 kleiner ist als der Durchmesser des zweiten Kabelabschnittes K2. Der Übergang von dem ersten Kabelabschnitt K1 zum zweiten Kabelabschnitt K2 und die Führungseinrichtung 30 bilden hierbei zusammen den Mitnehmer.

Beim Aufwickeln des zweiten Kabelabschnittes K2 auf den äußeren Korb 22 wird das Antriebsmittel des inneren Korbes 21 ebenfalls so betrieben, dass der auf den äußeren Korb 22 aufzuwickelnde zweite Kabelabschnitt K2 zwischen dem äußeren Korb 22 und der Zuführeinrichtung 50 immer unter Spannung steht bzw. vorgespannt ist.

Beim Abwickeln des Kabels von der Kabelaufnahme 20 kann das Antriebsmittel des inneren Korbes 21 im Leerlauf betrieben werden. Vorteilhaft ist es aber, auch beim Abwickeln das Antriebsmittel des inneren Korbes 21 so zu betreiben, dass der jeweilige Kabelabschnitt zwischen dem inneren bzw. dem äußeren Korb und der Zuführeinrichtung 50 immer unter Spannung steht bzw. vorgespannt ist.

Die Kabeltrommel 10 kann eine Anzahl von Querstreben 70 aufweisen, die im Wesentlichen parallel zur Drehachse DA verlaufen und die in Umfangsrichtung des äußeren Korbes 22 und beabstandet zueinander angeordnet sind.

Gemäß einer ersten Variante können diese Querstreben 70 an dem äußeren Korb 22 befestigt sein, etwa im Bereich des äußeren Durchmessers des Korbes 22, d.h. die Querstreben sind beabstandet zur Mantelfläche der Nabe des äußeren Korbes 22 an dem Korb 22 befestigt. Die Querstreben 70 drehen sich damit mit dem äußeren Korb 22 mit.

Gemäß einer zweiten Variante können diese Querstreben 70 an dem Gestell 15 befestigt sein. Das heißt, die Querstreben 70 drehen sich nicht mit dem äußeren Korb 22 mit.

Erfindungsgemäß kann der zweite Kabelabschnitt K2 auf zwei Arten aufgewickelt werden.

Gemäß einer ersten Art wird der zweite Kabelabschnitt K2 auf der Nabe des äußeren Korbes 22 aufgewickelt. Auf die vorstehend genannten Querstreben 70 kann dann verzichtet werden.

Gemäß einer zweiten Art und bei Vorsehen der vorstehend genannten Querstreben 70 kann der zweite Kabelabschnitt K2 auch an den Querstreben 70 und innerhalb der Querstreben aufgewickelt werden. Das heißt, dass die erste Lage des aufgewickelten zweiten Kabelabschnitts K2 nicht auf der Nabe des äußeren Korbs 22 aufgewickelt wird sondern an den Querstreben 70 anliegt. Die zweite Lage des aufgewickelten zweiten Kabelabschnitts K2 liegt dann innerhalb der ersten Lage des aufgewickelten zweiten Kabelabschnitts K2. Dadurch kann vermieden werden, dass sich die inneren Lagen des zweiten Kabelabschnittes K2 aufgrund der großen Vorspannung nach außen drücken und sich an den äußeren Lagen vorbeischieben. **Fig. 2** zeigt eine erfindungsgemäß Kabeltrommel in einer Schnittansicht entlang der Schnittachse A-A. **Fig. 3** zeigt eine vergrößerte Ansicht des in Fig. 2 gekennzeichneten Abschnittes B. Der Vorgang des Aufwickelns wird nachfolgend anhand des Koppelelements 40 beschrieben - er gilt aber analog auch für ein Kabel ohne Koppelelement, wenn der erste Kabelabschnitt K1 einen kleineren Durchmesser aufweist als der zweite Kabelabschnitt K2.

Der erste Kabelabschnitt K1 ist bereits nahezu vollständig auf den inneren Korb 21 aufgewickelt. Das Koppelelement 40 (das linke der beiden in Fig. 3 gezeigten Koppelelemente) befindet sich außerhalb der Zuführeinrichtung 50. Das Koppelelement 40 wird nun von der Zuführeinrichtung 50 der Kabelaufnahme 20 zugeführt (das linke der beiden in Fig. 3 gezeigten Koppelelemente). Lediglich zum besseren Verständnis des Ablaufes ist das Koppelement 40 in Fig. 2 zweimal gezeigt.
Das der Kabelaufnahme 20 zugeführte Koppelelement 40 (rechte Koppelelement) greift in eine Führungseinrichtung 30 ein (siehe Fig. 3). Die Führungseinrichtung wiest hier zwei parallel zur Drehachse DA verlaufende Rollen 31, 32 auf. Der Abstand der beiden Rollen ist so gewählt, dieser größer ist als der Durchmesser des ersten Kabelabschnitt K1 aber kleiner ist als der Durchmesser des Koppelelements 40 bzw. des zweiten Kabelabschnittes K2.

In einer alternativen nicht erfindungsgemäßen Ausgestaltung kann anstelle der Rollen 31,32 beispielsweise auch ein Ring vorgesehen sein, durch das der erste Kabelabschnitt K1 geführt wird. Der Ring kann frei beweglich auf einer parallel zur Drehachse verlaufenden Schiene angeordnet sein, sodass der Ring sich synchron mit der Zuführeinrichtung auf der Schiene hin und her bewegen kann. Die Verwendung von zwei Rollen 31, 32 hat sich aber als vorteilhafte Lösung herausgestellt.
Die Führungseinrichtung 30 bzw. die beiden Rollen 31, 32 sind im Bereich der Mantelfläche der Nabe des äußeren Korbes 22 angeordnet und zwar so, dass bei einem Aufwickeln des zweiten Kabelabschnittes K2 auf den äußeren Korb 22 diese nicht überstehen und den Wickelvorgang negativ beeinflussen.

Sobald das Koppelelement 40 in die Führungseinrichtung 30 eingreift bilden das Koppelelement 40 und die Führungseinrichtung 30 zusammen einen Mitnehmer. Bei einem Drehen (während des Aufwickelvorganges) des inneren Korbes 21 kann das Koppelelement 40 aufgrund des größeren Durchmessers nicht durch die Führungseinrichtung 30 hindurch gezogen werden, sodass sich der frei drehende äußere Korb 22 nunmehr mitdreht und in der Folge der zweite Kabelabschnitt K2 auf den äußeren Korb 22 aufgewickelt wird (entweder auf der Nabe des äußeren Korbes 22 oder an den Querstreben 70).

Sobald das Koppelelement 40 die Führungseinrichtung 30 passiert kann die Verfahrgeschwindigkeit der Zuführeinrichtung 50 angepasst werden, wie oben mit Bezug auf Fig. 1 beschrieben.

**Fig. 4** zeigt in den Abbildungen (a) bis (d) schematische Ansichten einer erfindungsgemäßen Kabeltrommel zur Verdeutlichung eines Aufwickelvorganges.

Abbildung (a) zeigt einen bereits weitgehend an dem inneren Korb 21 aufgewickelten ersten Kabelabschnitt K1. Während des Aufwickelns des ersten Kabelabschnittes K1 wird die Zuführeinrichtung 50 entsprechend der Position des aktuell aufgewickelten Abschnitts entlang der Führungseinrichtung 51 bewegt. In dem in Abbildung (a) gezeigten Zustand bewegt sich die Zuführeinrichtung 50 nach links. Die Verfahrgeschwindigkeit der Zuführeinrichtung 50 wird dabei so eingestellt bzw. gesteuert, wie vorstehend mit Bezug auf Fig. 1 beschrieben. Erreicht die Zuführeinrichtung 50 die linke oder rechte Endposition, dann wird die Verfahrrichtung der Zuführeinrichtung 50 geändert und die nächste Lage des zugeführten zweiten Kabelabschnitt K2 wird aufgewickelt.

Abbildung (b) zeigt den Zustand nach dem vollständigen Aufwickeln des ersten Kabelabschnittes K1 auf den inneren Korb 22. Das Koppelelement 40 zwischen dem ersten Kabelabschnitt K1 und dem zweiten Kabelabschnitt K2 hat die Zuführeinrichtung 50 bereits passiert und wurde von der Zuführeinrichtung 50 bereits detektiert. Aufgrund des oben beschriebenen "Mitnehmens" des äußeren Korbes 22 durch das Koppelelement 40 dreht sich nunmehr auch der äußere Korb 22 und der zweite Kabelabschnitt K2 wird an dem äußeren Korb aufgewickelt. Bei der Detektion des Koppelelements 40 wird die Zuführeinrichtung 50 zudem in eine Startposition verfahren (in Abbildung (b) ganz links an der Führungseinrichtung 51) und dann mit dem Aufwickeln des zweiten Kabelabschnittes K2 begonnen.

Während sich der äußere Korb 22 dreht wird die Zuführeinrichtung 50 mit einer vorbestimmten Geschwindigkeit (die wie mit Bezug auf Fig. 1 beschreiben eingestellt bzw. gesteuert wird) nach rechts verfahren und die erste Lage des zweiten Kabelabschnittes K2 wird auf den äußeren Korb 22 aufgewickelt. Eine bereits teilweise aufgewickelte erste Lage des zweiten Kabelabschnitt K2 ist in Abbildung (c) gezeigt. Wie mit Bezug auf Fig. 1 beschrieben, kann das zweite Kabelabschnitt K2 auf der Nabe des äußeren Korbes 22 oder an den Querstreben 70 aufgewickelt werden.

Abbildung (d) zeigt den Zustand des Aufwickelvorganges bei dem der zweite Kabelabschnitt K2 vollständig auf dem äußeren Korb 22 aufgewickelt ist. Der an der Zuführeinrichtung 50 noch überstehende Abschnitt des zweiten Kabelabschnittes K2 wird nicht aufgewickelt.

Sollte der zweite Kabelabschnitt K2 so lange sein, dass eine Lage zum Aufwickeln nicht ausreichend ist, dass würde die in Abbildung (d) gezeigte Zuführeinrichtung 50 nach erreichen der rechten Endposition ihre Verfahrrichtung ändern und die zweite Lage des zweiten Kabelabschnittes K2 würde von rechts nach links auf den äußeren Korb aufgewickelt werden. In Abhängigkeit davon ob von der Nabe her oder von den Querstangen 70 her aufgewickelt wird, liegt die zweite Lage des zweiten Kabelabschnittes K2 radial außerhalb der ersten Lage (beim Aufwickeln von der Nabe her) oder radial innerhalb der ersten Lage (beim Aufwickeln von den Querstangen 70 her).

Das Abwickeln des Kabels erfolgt dann in umgekehrter Reihenfolge.

An dem zweiten Kabelabschnitt K2, der hier als Schiebeaal mit bestimmten Steifigkeit ausgebildet, ist eine Bildaufnahmeeinrichtung 60 angeordnet, die mit dem Schiebeaal in ein Rohr oder in einen Kanal verbracht werden kann. Abstelle der Kamera können aber auch andere Inspektionseinrichtungen oder Manipulatoreinrichtungen, etwa ein Greifer, angeordnet werden.

### Bezugszeichen:

- 10: Kabeltrommel bzw. Haspel
- 15: Gestell der Kabeltrommel 10
- 20: Kabelaufnahme der Kabeltrommel 10
- 21: innerer Korb der Kabelaufnahme 20
- 22: äußerer Korb der Kabelaufnahme 20
- 30: Führungseinrichtung an dem äußeren Korb 22
- 31, 32: Rollen der Führungseinrichtung 30
- 40: Koppelelement zwischen dem ersten Kabelabschnitt K1 und dem zweiten Kabelabschnitt K2
- 50: Zuführeinrichtung
- 51: Führungseinrichtung, z.B. Führungsschiene, der Zuführeinrichtung 50
- 60: Kamera
- 70: Querstreben am Gestell 15 oder am äußeren Korb 22
- A-A: Schnittachse
- B: Ausschnitt
- d1: Durchmesser des innerer Korbes 21
- d2: Durchmesser des äußeren Korbes 22
- DA: Drehachse der Kabelaufnahme 20 bzw. des inneren und des äußeren Korbes 21, 22
- K: Kabel
- K1: erster Kabelabschnitt des Kabels K
- K2: zweiter Kabelabschnitt des Kabels K

## Patentansprüche

1. Kabeltrommel (10), insbesondere für ein Rohrinspektionssystem, wobei die Kabeltrommel ein Gestell (15) und eine Kabelaufnahme (20) aufweist, wobei die Kabelaufnahme drehbar an dem Gestell angeordnet ist, wobei ein Kabel (K) auf die Kabelaufnahme aufwickelbar und von der Kabelaufnahme abwickelbar ist, und wobei
- die Kabelaufnahme (20) einen inneren Korb (21) und einen äußeren Korb (22) aufweist, wobei der Durchmesser (d1) des inneren Korbes kleiner ist als der Durchmesser (d2) des äußeren Korbes,
- der innere Korb (21) koaxial zum äußeren Korb (22) und innerhalb des äußeren Korbes angeordnet ist,
- der innerer Korb (21) und der äußere Korb (22) unabhängig voneinander drehbar sind,
- der innere Korb (21) zur Aufnahme eines ersten Kabelabschnittes (K1) des Kabels (K) und der äußere Korb (22) zur Aufnahme eines zweiten Kabelabschnittes (K2) des Kabels (K) vorgesehen sind, und
- an dem äußeren Korb (22) eine Führungseinrichtung (30) vorgesehen ist, durch die der erste Kabelabschnitt (K1) zum inneren Korb (K2) oder umgekehrt führbar ist,
**dadurch gekennzeichnet, dass**
die Führungseinrichtung (30) zwei zueinander beabstandete und parallel zur Drehachse (DA) verlaufende Rollen (31, 32) aufweist, wobei der erste Kabelabschnitt (K1) zwischen den beiden Rollen verläuft.

2. Kabeltrommel nach dem vorhergehenden Anspruch, wobei an dem Gestell (15) eine Zuführeinrichtung (50) angeordnet ist, die angepasst ist,
- das Kabel (K) zum Aufwickeln definiert der Kabelaufnahme (20) zuzuführen, und/oder
- das Kabel (K) definiert von der Kabelaufnahme (20) abzuwickeln.

3. Kabeltrommel nach dem vorhergehenden Anspruch, wobei die Zuführeinrichtung (50) radial außerhalb des äußeren Korbes (22) angeordnet ist.

4. Kabeltrommel nach einem der Ansprüche 2 oder 3, wobei die Zuführeinrichtung (50) zumindest eine erste Antriebseinheit aufweist, mit der das Kabel (K) definiert zugeführt wird und/oder definiert abgewickelt wird.

5. Kabeltrommel nach einem der vorhergehenden Ansprüche, wobei der innere Korb (21) mit einer zweiten Antriebseinheit gekoppelt ist, um den inneren Korb um eine Drehachse (DA) zu drehen.

6. Kabeltrommel nach einem der vorhergehenden Ansprüche, wobei der äußere Korb (22) um die Drehachse (DA) frei drehbar gelagert ist.

7. Kabeltrommel nach einem der vorhergehenden Ansprüche, wobei die Führungseinrichtung (30) so an dem äußeren Korb (22) angeordnet ist, dass der erste Kabelabschnitt (K1) von radial außerhalb des äußeren Korbes (22) zum inneren Korb (K2) oder umgekehrt führbar ist.

8. Kabeltrommel nach einem der vorhergehenden Ansprüche, wobei
- der Durchmesser des Kabels des ersten Kabelabschnittes (K1) kleiner ist als der Durchmesser des Kabels des zweiten Kabelabschnittes (K2), und/oder
- der erste Kabelabschnitt (K1) über ein Koppelelement (40) mit dem zweiten Kabelabschnitt (K2) gekoppelt ist,
wobei der Abstand der beiden Rollen (31, 32) so gewählt ist, dass er
- größer ist als der Durchmesser des Kabels des ersten Kabelabschnittes (K1) und
- kleiner ist als der Durchmesser des Kabels des zweiten Kabelabschnittes (K2) und/oder kleiner ist als der Durchmesser des Koppelelements (40).

9. Kabeltrommel nach dem vorhergehenden Anspruch, wobei die Führungseinrichtung (30) zusammen mit dem Koppelelement (40) und/oder zusammen mit dem Übergangsbereich vom ersten Kabelabschnitt (K1) zum zweiten Kabelabschnitt (K2) eine Mitnehmereinrichtung bilden, derart, dass beim Aufwickeln des Kabels (K) der vollständig auf dem inneren Korb (21) aufgewickelte erste Kabelabschnitt (K1) den äußeren Korb (22) mitnimmt, sodass der zweite Kabelabschnitt (K2) auf den äußeren Korb (22) aufgewickelt wird.

10. Kabeltrommel nach einem der vorhergehenden Ansprüche 2 bis 9, wobei die Zuführeinrichtung (50) entlang einer Führungseinrichtung (51) verfahrbar ist, vorzugsweise alternierend hin und her verfahrbar ist, wobei die Führungseinrichtung (51) vorzugsweise mindestens so lang ist wie die Breite der Kabelaufnahme (20).

11. Kabeltrommel nach dem vorhergehenden Anspruch, wobei die Führungseinrichtung (51) eine Führungsschiene umfasst, die vorzugswiese parallel zur Drehachse (DA) verläuft.

12. Kabeltrommel nach dem vorhergehenden Anspruch, wobei die Zuführeinrichtung (50) eine dritte Antriebseinheit aufweist, mit der die Zuführeinrichtung verfahren wird.

13. Kabeltrommel nach einem der beiden vorhergehenden Ansprüche, wobei die Verfahrgeschwindigkeit der Zuführeinrichtung (50) abhängig vom Durchmesser des Kabels (K) ist.

14. Kabeltrommel nach einem der vorhergehenden Ansprüche 2 bis 12, wobei die Zuführeinrichtung (50) angepasst ist, das Kabel (K) während des Aufwickelns auf die Kabelaufnahme (20) zwischen der Zuführeinrichtung und der Kabelaufnahme zu spannen oder unter Spannung zu halten.

15. Kabeltrommel nach einem der Ansprüche 2 bis 13, wobei diese eine Sensoreinrichtung aufweist, die angepasst ist, während des Aufwickelns und/oder während des Abwickelns des Kabels (K) den Übergangsbereich vom ersten Kabelabschnitt (K1) zum zweiten Kabelabschnitt (K2) und/oder das Koppelelement (40) zu detektieren, wobei die Zuführeinrichtung (50) angepasst ist, bei einer Detektion des Übergangsbereiches und/oder des Koppelelements die Verfahrgeschwindigkeit zu ändern.

16. Kabeltrommel nach einem der Ansprüche 9 bis 14, wobei die zumindest eine erste Antriebseinheit und die zweite Antriebseinheit so aufeinander abgestimmt sind, dass
- die zumindest eine erste Antriebseinheit die Aufwickelgeschwindigkeit und/oder die Abwickelgeschwindigkeit vorgeben bzw. festlegt, und
- die zweite Antriebseinheit gewährleistet, dass das Kabel (K) zwischen der Zuführeinrichtung (50) und der Kabelaufnahme (20) gespannt ist.

17. Kabeltrommel nach einem der vorhergehenden Ansprüche, wobei diese eine Anzahl von zueinander beabstandeten Querstreben (70) aufweist, die weitgehend parallel zur Drehachse (DA) verlaufen, wobei die Querstreben
- radial außerhalb des äußeren Korbes (22) und in Umfangsrichtung zum äußeren Korb (22) angeordnet sind und an dem Gestell (15) befestigt sind, oder
- in Umfangsrichtung am äußeren Korb (22) angeordnet sind und an dem äußeren Korb (22) befestigt sind.

## Claims

1. Cable reel (10), in particular for a pipe inspection system, the cable reel having a frame (15) and a cable receptacle (20), the cable receptacle being rotatably arranged on the frame, it being possible to wind a cable (K) onto the cable receptacle and unwind it from the cable receptacle, and
- the cable receptacle (20) having an inner cage (21) and an outer cage (22), the diameter (d1) of the inner cage being smaller than the diameter (d2) of the outer cage,
- the inner cage (21) being arranged coaxially with respect to the outer cage (22) and being inside the outer cage,
- it being possible to rotate the inner cage (21) and the outer cage (22) independently of one another,
- the inner cage (21) being provided for receiving a first cable portion (K1) of the cable (K) and the outer cable (22) being provided for receiving a second cable portion (K2) of the cable (K), and
- a guide means (30), through which the first cable portion (K1) can be guided to the inner cage (K2) or vice versa, being provided on the outer cage (22),
**characterized in that**
the guide means (30) has two rollers (31, 32) that are spaced apart from each other and extend parallel to the axis of rotation (DA), the first cable portion (K1) extending between the two rollers.

2. Cable reel according to the preceding claim, a feeding device (50) being arranged on the frame (15), which feeding device is adapted
- to feed the cable (K) to the cable receptacle (20) in a defined manner for winding, and/or
- to unwind the cable (K) from the cable receptacle (20) in a defined manner.

3. Cable reel according to the preceding claim, the feeding device (50) being arranged radially outside the outer cage (22).

4. Cable reel according to either claim 2 or 3, the feeding device (50) having at least one first drive unit by means of which the cable (K) is fed in a defined manner and/or unwound in a defined manner.

5. Cable reel according to one of the preceding claims, the inner cage (21) being coupled to a second drive unit in order to rotate the inner cage about an axis of rotation (DA).

6. Cable reel according to one of the preceding claims, the outer cage (22) being mounted so as to be freely rotatable about the axis of rotation (DA).

7. Cable reel according to one of the preceding claims, the guide means (30) being arranged on the outer cage (22) in such a way that the first cable portion (K1) can be guided from radially outside the outer cage (22) to the inner cage (K2) or vice versa.

8. Cable reel according to one of the preceding claims,
- the diameter of the cable of the first cable portion (K1) being smaller than the diameter of the cable of the second cable portion (K2), and/or
- the first cable portion (K1) being coupled to the second cable portion (K2) via a coupling element (40),
the spacing between the two rollers (31, 32) being chosen such that
- it is greater than the diameter of the cable of the first cable portion (K1) and
- it is smaller than the diameter of the cable of the second cable portion (K2) and/or smaller than the diameter of the coupling element (40).

9. Cable reel according to the preceding claim, the guide means (30) forming a carrier means together with the coupling element (40) and/or together with the transition region from the first cable portion (K1) to the second cable portion (K2) such that, during winding of the cable (K), the first cable portion (K1) completely wound on the inner cage (21) carries along the outer cage (22) such that the second cable portion (K2) is wound onto the outer cage (22).

10. Cable reel according to one of the preceding claims 2 to 9, the feeding device (50) being movable, preferably movable in an alternating reciprocal manner, along a guide means (51), the guide means (51) preferably being at least as long as the width of the cable receptacle (20).

11. Cable reel according to the preceding claim, the guide means (51) comprising a guide rail that preferably extends parallel to the axis of rotation (DA).

12. Cable reel according to the preceding claim, the feeding device (50) having a third drive unit by means of which the feeding device is moved.

13. Cable reel according to one of the two preceding claims, the travel speed of the feeding device (50) being dependent on the diameter of the cable (K).

14. Cable reel according to one of the preceding claims 2 to 12, the feeding device (50) being adapted to put tension on or maintain the tension of the cable (K) between the feeding device and the cable receptacle during winding onto the cable receptacle (20).

15. Cable reel according to one of claims 2 to 13, said cable reel having a sensor device that is adapted to detect the transition region from the first cable portion (K1) to the second cable portion (K2) and/or the coupling element (40) during the winding and/or during the unwinding of the cable (K), the feeding device (50) being adapted to change the travel speed upon detection of the transition region and/or the coupling element.

16. Cable reel according to one of claims 9 to 14, the at least one first drive unit and the second drive unit being coordinated with one another such that
- the at least one first drive unit prescribes or defines the winding speed and/or the unwinding speed, and
- the second drive unit ensures that the cable (K) is tensioned between the feeding device (50) and the cable receptacle (20).

17. Cable reel according to one of the preceding claims, said cable reel having a number of transverse struts (70) that are spaced apart from one another and extend substantially parallel to the axis of rotation (DA), the transverse struts being
- arranged radially outside the outer cage (22) and in the circumferential direction with respect to the outer cage (22) and being attached to the frame (15), or
- arranged in the circumferential direction on the outer cage (22) and attached to the outer cage (22).

## Revendications

1. Enrouleur de câble (10), en particulier pour un système d'inspection de tuyaux, dans lequel l'enrouleur de câble présente un support (15) et un réceptacle de câble (20), le réceptacle de câble étant disposé de manière à pouvoir tourner sur le support, un câble (K) pouvant être enroulé autour du réceptacle de câble et pouvant être déroulé depuis le réceptacle de câble, et
- le réceptacle de câble (20) présentant un panier intérieur (21) et un panier extérieur (22), le diamètre (d1) du panier intérieur étant inférieur au diamètre (d2) du panier extérieur,
- le panier intérieur (21) étant disposé coaxialement par rapport au panier extérieur (22) et à l'intérieur du panier extérieur,
- le panier intérieur (21) et le panier extérieur (22) pouvant être tournés indépendamment l'un de l'autre,
- le panier intérieur (21) étant prévu pour recevoir un premier tronçon de câble (K1) du câble (K) et le panier extérieur (22) étant prévu pour recevoir un second tronçon de câble (K2) du câble (K), et
- un dispositif de guidage (30) étant prévu sur le panier extérieur (22), grâce auquel le premier tronçon de câble (K1) peut être guidé vers le panier intérieur (K2) ou vice versa,
**caractérisé en ce que**
le dispositif de guidage (30) présente deux rouleaux (31, 32) espacés l'un de l'autre et s'étendant parallèlement à l'axe de rotation (DA), le premier tronçon de câble (K1) s'étendant entre les deux rouleaux.

2. Enrouleur de câble selon la revendication précédente, dans lequel un dispositif d'acheminement (50) est disposé sur le support (15) et est adapté pour
- acheminer le câble (K) au réceptacle de câble (20) de manière définie pour l'enroulement, et/ou
- dérouler le câble (K) depuis le réceptacle de câble (20) de manière définie.

3. Enrouleur de câble selon la revendication précédente, dans lequel le dispositif d'acheminement (50) est disposé radialement à l'extérieur du panier extérieur (22).

4. Enrouleur de câble selon l'une des revendications 2 ou 3, dans lequel le dispositif d'acheminement (50) présente au moins une première unité d'actionnement grâce à laquelle le câble (K) est acheminé de manière définie et/ou est déroulé de manière définie.

5. Enrouleur de câble selon l'une des revendications précédentes, dans lequel le panier intérieur (21) est accouplé à une deuxième unité d'actionnement pour faire tourner le panier intérieur autour d'un axe de rotation (DA).

6. Enrouleur de câble selon l'une des revendications précédentes, dans lequel le panier extérieur (22) est monté libre de manière à pouvoir tourner autour de l'axe de rotation (DA).

7. Enrouleur de câble selon l'une des revendications précédentes, dans lequel le dispositif de guidage (30) est disposé sur le panier extérieur (22) de telle sorte que le premier tronçon de câble (K1) peut être guidé radialement à l'extérieur du panier extérieur (22) vers le panier intérieur (K2) ou vice versa.

8. Enrouleur de câble selon l'une des revendications précédentes, dans lequel
- le diamètre du câble du premier tronçon de câble (K1) est inférieur au diamètre du câble du second tronçon de câble (K2), et/ou
- le premier tronçon de câble (K1) est accouplé au second tronçon de câble (K2) par l'intermédiaire d'un élément d'accouplement (40),
dans lequel la distance entre les deux rouleaux (31, 32) est choisie de telle sorte qu'elle est
- supérieure au diamètre du câble du premier tronçon de câble (K1) et
- inférieure au diamètre du câble du second tronçon de câble (K2) et/ou inférieure au diamètre de l'élément d'accouplement (40).

9. Enrouleur de câble selon la revendication précédente, dans lequel le dispositif de guidage (30) forme, conjointement avec l'élément d'accouplement (40) et/ou conjointement avec la zone de transition du premier tronçon de câble (K1) au second tronçon de câble (K2), un dispositif d'entraînement, de telle sorte que lors de l'enroulement du câble (K), le premier tronçon de câble (K1), qui est complètement enroulé autour du panier intérieur (21), entraîne le panier extérieur (22), de sorte que le second tronçon de câble (K2) est enroulé autour du panier extérieur (22).

10. Enrouleur de câble selon l'une des revendications précédentes 2 à 9, dans lequel le dispositif d'acheminement (50) peut être déplacé le long d'un dispositif de guidage (51), de préférence peut être déplacé d'avant en arrière de manière alternée, le dispositif de guidage (51) étant de préférence au moins aussi long que la largeur du réceptacle de câble (20).

11. Enrouleur de câble selon la revendication précédente, dans lequel le dispositif de guidage (51) comprend un rail de guidage qui s'étend de préférence parallèlement à l'axe de rotation (DA).

12. Enrouleur de câble selon la revendication précédente, dans lequel le dispositif d'acheminement (50) présente une troisième unité d'actionnement avec laquelle le dispositif d'acheminement est déplacé.

13. Enrouleur de câble selon l'une des deux revendications précédentes, dans lequel la vitesse de déplacement du dispositif d'acheminement (50) dépend du diamètre du câble (K).

14. Enrouleur de câble selon l'une des revendications précédentes 2 à 12, dans lequel le dispositif d'acheminement (50) est adapté pour tendre le câble (K) entre le dispositif d'acheminement et le réceptacle de câble ou pour le maintenir sous tension lors de l'enroulement autour du réceptacle de câble (20).

15. Enrouleur de câble selon l'une des revendications 2 à 13, dans lequel ledit enrouleur de câble présente un dispositif de capteur qui est adapté, pendant l'enroulement et/ou pendant le déroulement du câble (K), pour détecter la zone de transition du premier tronçon de câble (K1) au second tronçon de câble (K2) et/ou l'élément d'accouplement (40), le dispositif d'acheminement (50) étant adapté pour modifier la vitesse de déplacement lors d'une détection de la zone de transition et/ou de l'élément d'accouplement.

16. Enrouleur de câble selon l'une des revendications 9 à 14, dans lequel l'au moins une première unité d'actionnement et la deuxième unité d'actionnement sont coordonnées l'une avec l'autre de telle sorte que
- l'au moins une première unité d'actionnement assure ou règle la vitesse d'enroulement et/ou la vitesse de déroulement, et
- la deuxième unité d'actionnement veille à ce que le câble (K) est tendu entre le dispositif d'acheminement (50) et le réceptacle de câble (20).

17. Enrouleur de câble selon l'une des revendications précédentes, dans lequel ledit enrouleur de câble présente un certain nombre d'entretoises transversales (70) espacées les unes des autres, lesquelles s'étendent largement parallèlement à l'axe de rotation (DA), les entretoises transversales
- étant disposées radialement à l'extérieur du panier extérieur (22) et dans la direction circonférentielle vers le panier extérieur (22) et étant fixées au support (15), ou
- étant disposées dans la direction circonférentielle sur le panier extérieur (22) et étant fixées au panier extérieur (22).
